(19) Europäisches Patentamt / European Patent Office / Office européen des brevets

(11) **EP 2 821 527 B1**

(12) **EUROPEAN PATENT SPECIFICATION**

(45) Date of publication and mention of the grant of the patent:
**02.05.2018 Bulletin 2018/18**

(51) Int Cl.:
*C25D 1/04* *(2006.01)*     *H01M 4/66* *(2006.01)*
*C25D 7/06* *(2006.01)*     *H01M 10/0525* *(2010.01)*
*H01M 4/02* *(2006.01)*

(21) Application number: **13754147.0**

(22) Date of filing: **01.03.2013**

(86) International application number:
**PCT/JP2013/055734**

(87) International publication number:
**WO 2013/129664 (06.09.2013 Gazette 2013/36)**

(54) **ELECTROLYTIC COPPER FOIL, AND NEGATIVE ELECTRODE COLLECTOR FOR SECONDARY BATTERY**

ELEKTROLYTISCHE KUPFERFOLIE UND NEGATIVELEKTRODENKOLLEKTOR FÜR EINE SEKUNDÄRBATTERIE

FEUILLE DE CUIVRE ÉLECTROLYTIQUE ET COLLECTEUR D'ÉLECTRODE NÉGATIVE POUR BATTERIE SECONDAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.03.2012 JP 2012047397**

(43) Date of publication of application:
**07.01.2015 Bulletin 2015/02**

(73) Proprietor: **JX Nippon Mining & Metals Corporation**
**Tokyo 100-8164 (JP)**

(72) Inventors:
• **KOHIKI, Michiya**
  **Hitachi-shi**
  **Ibaraki 317-0056 (JP)**
• **ISHII, Masafumi**
  **Hitachi-shi**
  **Ibaraki 317-0056 (JP)**

(74) Representative: **Yeadon IP Limited**
**Leeds Innovation Centre**
**103 Clarendon Road**
**Leeds LS2 9DF (GB)**

(56) References cited:
EP-A1- 2 692 904     EP-A1- 2 693 542
WO-A1-2012/002526    WO-A2-2011/129633
JP-A- H07 188 969    JP-A- 2008 101 267
JP-A- 2008 285 727   JP-A- 2011 142 071
US-A- 5 958 209

## Description

[Technical field]

The present invention relates to an electrolytic copper foil and particularly to a negative electrode current collector for a secondary battery made of the electrolytic copper foil.

[Background art]

Lithium ion batteries are characterized by their relatively high energy density as well as a relatively high voltage and are widely used in small size electronic devices such as laptop computers, video cameras, digital cameras or cell phones. Also, lithium ion batteries have come to practical use as electric sources for large scale instruments such as electric vehicles, dispersedly installed electric sources for general household use, or the like.

In general, an electrode body for a lithium ion battery has a stacked structure comprising a number of positive electrodes, separators and negative electrodes which have been wound or laminated together. Among them, the negative electrode consists mainly of a negative electrode current collector and a negative electrode active material formed on the surface of thereof.

In recent years, with an increase in the density and the capacity of lithium ion secondary batteries, the volumetric shrinkage rate of the negative electrode active material is increasing and accordingly the required strength for the current collector is also increasing. Particularly, metal alloy-based active materials containing Si, Sn or the like have a volumetric expansion due to the charge reaction of several to several ten times as high as conventional carbon. Further, as the binder material for the metal alloy active material requires a large adhesive strength, an organic solvent having a high glass transition temperature such as polyimide is employed. Since the binder having a high glass transition temperature requires a high temperature for curing, an electric current collector which exhibits a low reduction of strength after heating is required.

Japanese Patent No. 3,850,155 (Patent document 1) discloses an example of an electrolytic copper foil having a low impurity content and a high normal tensile strength, for the purpose of improving the tensile strength at the normal temperature as well as after heating. Japanese Patent Application Publication No. 2008-101267 (Patent document 2) and Japanese Patent Application Publication No.2009-299100 (Patent document 3) disclose examples of electrolytic copper foils which have a high normal tensile strength and a lesser decrease in the tensile strength after thermal treatment in order to keep a high flexibility after heating.

[Prior art references]

[Patent documents]

[Patent document 1]
Japanese Patent No. 3,850,155
[Patent document 2]
Japanese Patent Application Publication No. 2008-101267
[Patent document 3]
Japanese Patent Application Publication No.2009-299100

[Summary of the invention]

[Problem to be solved by the invention]

However, although the electrolytic copper foil disclosed in Patent document 1 has a low impurity content and a high normal tensile strength, it has a problem that the tensile strength is significantly reduced after receiving thermal treatment and accordingly it does not have sufficient properties as copper foil required for the negative electrode of a secondary battery. Also, although the electrolytic copper foils disclosed in Patent documents 2 and 3 have a high normal tensile strength and the initial tensile strength is not lowered so much after heating at 180°C, transition of the tensile strength at a higher temperature is not clear and furthermore the conductor resistance property, which is one of the most important factors for a negative electrode collector for LiB, is impaired due to a high content of impurities introduced to enhance the tensile strength, and accordingly the use thereof for such application is not appropriate.

In view of the above-mentioned problems, one object of the present invention is to provide an electrolytic copper foil having a high normal tensile strength and a low decrease in the tensile strength after thermal treatment. Further, another object of the present invention is to provide a method for producing such an electrolytic copper foil.

Another object of the present invention is to provide a negative electrode current collector for a secondary battery made of such an electrolytic copper foil.

[Means for solving the problem]

In an effort to solve the problem, the present inventors have found that by optimizing the ratio to limiting current density during foil production and the concentration of glue in the electrolytic solution the growth of copper grains caused by heat softening is suppressed, and small grain sizes are maintained even after the heating. It has been also found that the electrolytic copper foil thus obtained has a high normal tensile strength and a less reduction in the tensile strength after thermal treatment.

In one aspect, the present invention, which has been completed based on these findings, provides an electrolytic copper foil having a normal tensile strength of 500-750 MPa and further having:

(i) a tensile strength after heating at 400°C for one hour of at least 350 MPa and a copper grain size after heating at 400°C for one hour of 0.50$\mu$m or less, or
(ii) a tensile strength after heating at 400°C for one hour of at least 50% of the normal tensile strength and a copper grain size after heating at 400°C for one hour of 0.50$\mu$m or less.

In some embodiments the electrolytic copper foil may further have:

(i)(a) a tensile strength after heating at 400°C for one hour of at least 450 MPa, or
(ii)(a) a tensile strength after heating at 400°C for one hour of at least 65% of the normal tensile strength.

In one embodiment of the electrolytic copper foil according to the present invention, an elongation percentage is at least 4%.

In another embodiment of the electrolytic copper foil according to the present invention, the elongation percentage is at least 6%.

In a further aspect, the present invention provides a method for manufacturing an electrolytic copper foil according to the present invention, which comprises performing electrolysis using a sulfuric acid-based copper electrolytic solution containing 6-11 mass ppm of glue with a ratio to limiting current density of 0.14-0.16.

In a further aspect, the present invention provides a negative electrode current collector for a secondary battery configured from the electrolytic copper foil according to the present invention.

In a further aspect, the present invention provides a secondary battery provided with the negative electrode current collector according to the present invention.

[Effect of the invention]

The electrolytic copper foil according to the present invention has a high normal tensile strength and a resistance to the lowering of the tensile strength after thermal treatment. Accordingly, the electrolytic copper foil according to the present invention can be advantageously used as a negative electrode current collector for a secondary battery which requires heat resistance.

[Modes for carrying out the invention]

One of the characteristic features of the electrolytic copper foil according to the present invention is the high normal tensile strength. More specifically, in one embodiment of the electrolytic copper foil according to the present invention, the normal tensile strength is 500-750 MPa. Since the higher the normal tensile strength is more advantageous for the press working or slit working, the normal tensile strength is preferably at least 600MPa, and more preferably at least 630MPa. However, extremely high normal tensile strength will not only tend to result in a lowered tensile strength retention rate after thermal treatment but also cause an adverse effect on the elongation property. Accordingly the normal tensile strength is preferably 750 MPa or less, and more preferably 700MPa or less.

In the present invention, the term "normal tensile strength" means a value obtained from the tensile strength test at normal temperature (23°C) based on IPC-TM-650 test method.

Another characteristic feature of the electrolytic copper foil according to the present invention is that the tensile strength retention rate is high after the foil is heated at a fairly high temperature of 400°C for one hour. Looking from another viewpoint, this means that a softening phenomenon due to the growth of the copper grains under heating is difficult to occur, and accordingly a small grain size can be retained even after the heating. Heretofore, prior art techniques which tried to improve the heat resistance on the low temperature side such as 180°C×1hr or 130°C×15hrs are disclosed in Patent documents 1 and 2, but, as far as the inventors know, there has been no precedent that can materialize the heat resistance at high temperature side as in the present invention.

Specifically, the electrolytic copper foil provided according to the present invention has, in one embodiment, a tensile strength after heat treatment at 400°C for one hour of at least 350MPa, more preferably at least 400 MPa. Further, though it is not necessary to define the upper limit of the tensile strength after heat treatment at 400°C for one hour, the tensile strength may be for instance 600MPa or less, or for instance 580 MPa or less, or for instance 550MPa or less.

In a further embodiment of the electrolytic copper foil according to the present invention, the tensile strength after heating at 400°C for one hour is at least 50%, preferably at least 60%, of the initial tensile strength. The upper limit is not particularly provided, but the tensile strength is typically 95% or less, more typically 90% or less, further typically 85% or less, for example 80 % or less.

In the present invention, "tensile strength after heating at 400°C for one hour" means the value obtained after the specimen is heated at 400°C for one hour and is left to cool to normal temperature (23°C), and thereafter the tensile strength test is performed according to IPC-TM-650.

Also, in a yet further embodiment, the electrolytic copper foil according to the present invention has a copper grain size after heating at 400°C for one hour of $0.50\mu$m or less, preferably $0.45\mu$m or less, and more preferably $0.30\mu$m or less. Also, the lower limit of the copper grain size after heating at 400°C for one hour needs not be particularly defined but it is at least $0.01\mu$m in one embodiment, at least $0.05\mu$m in another embodiment, and at least $0.07\mu$m in a further embodiment.

In the present invention, "copper grain size after heating at 400°C for one hour" means the value determined by the measurement in which the specimen is heated at 400°C for one hour, then allowed to cool to normal temperature (23°C), and then grain size thereof is measured using the linear intercept method from a FIB-SIM cross-sectional photograph.

Another feature of the electrolytic copper foil according to the present invention is that it has a high tensile strength and an elongation percentage of at least a certain value. There is an inverse correlation between the strength and the elongation percentage. In general, the higher the strength is, the lower elongation percentage appears. When the tensile strength is high and the elongation percentage is retained at or more than a certain amount, not only is there an advantageous effect in that large stress exerted on the foil accompanied by a large volume change of the active material at the time of electrical charging and discharging is absorbed, but also there is an advantageous effect in that the increased productivity due to the improved foil feeding in the production line can be achieved.

Although the elongation percentage depends on the thickness of the electrolytic copper foil, a large elongation percentage of at least 4%, typically at least 6%, more typically 6-10%, for example 6-9%, can be obtained if the electrolytic copper foil having a thickness of around 6-20$\mu$m is adopted. The superior elongation, while retaining a high strength and a high thermal resistance, achieves an advantage that, when the electrolytic copper foil is used as the electrolytic copper foil for a secondary battery negative electrode current collector, the large stress owing to the large volume change exerted on the foil during the charging and discharging will be absorbed. In the present invention, "elongation percentage" means the elongation percentage at break at normal temperature (23°C) when the test piece is subjected to the tensile strength test according to IPC-TM-650.

$$\text{Elongation percentage } (\%) = (L\text{-}L_0)/L_0 \times 100$$

where $L_0$: length of the specimen prior to the test, L: Length of the specimen at the time of breakage of the specimen.

The thickness of the electrolytic copper foil is not particularly restricted but when it is used as the electrolytic copper foil for a secondary battery negative electrode current collector, the above-mentioned property can be sufficiently obtained if 20$\mu$m or less, preferably 18$\mu$m or less, more preferably 15$\mu$m or less is adopted. The lower limit of the thickness is not particularly restricted but is at least 6$\mu$m, for example.

In manufacturing the electrolytic copper foil of the present invention, a sulfuric acid-based copper electrolytic solution containing 6-11 mass ppm of glue is put into an electrolytic bath, and electrodeposition on the cathode is performed with a ratio to limiting current density of 0.14-0.16. For example, this production can be carried out with use of an electrolytic copper foil producing device composed of a rotary cathode drum made of titanium or stainless steel having a diameter of about 3,000 mm and a width of about 2,500 mm, and an electrode arranged around the drum with a spacing of about 3-10 mm. The sulfuric acid-based copper electrolytic solution may typically have a copper concentration of 80-110g/L and a sulfuric acid concentration of 70-110g/L.

If the concentration of glue is over 11 mass ppm, the elongation percentage tends to be lowered. On the other hand, if it is less than 6 mass ppm, the tensile strength after heat treatment is lowered and accordingly 6-11 mass ppm is optimal.

If the ratio to limiting current density is more than 0.16, the tensile strength after heat treatment is lowered, while if the ratio to limiting current density is less than 0.14, the initial tensile strength becomes lowered. Accordingly, a ratio to limiting current density of 0.14-0.16 is preferred. In the present invention, the ratio to limiting current density is defined by the following formula:

$$\text{The ratio to limiting current density} = \text{Actual current density/limiting current density}$$

The limiting current density varies depending on the copper concentration, sulfuric acid concentration, the rate of electrolytic solution supply, the distance between the electrodes, and the temperature of the electrolytic solution but, in the discussion here, the current density at the boundary between normal plating (the state in which the copper is deposited in layer) and rough plating (burned plating: the condition in which the copper is deposited in a crystal form (spherical, acicular, dendritic, etc.), and has an irregular surface). The limiting current density is defined as the current density (observed with the naked eye) at the limit (right before burned plating) to maintain normal plating by the Hull Cell test. Specifically, in the Hull Cell test, the copper concentration, the sulfuric acid concentration, and the temperature of the electrolytic solution are set to the production conditions of the copper foil, and the Hull Cell test is carried out. Then, the state of the copper layer formation under the composition and temperature of the electrolytic solution is examined (as to whether the copper is deposited in layer or in a crystal form).

Thereafter, based on the current density chart prepared by YAMAMOTO-MS Co., Ltd, the current density is determined from the location of the test piece where the boundary between normal plating and rough plating is found. The current density at the boundary location was determined as the limiting current density. Thus, the limiting current density is determined under the composition and temperature of the electrolytic solution. In general, there is a tendency that the shorter the distance between the electrodes, the higher is the limiting current density. In the working example section, the test piece used in the Hall Cell test was the Hull Cell test brass plate manufactured by YAMAMOTO-MS Co., Ltd. Incidentally, it was a normal practice in the art to produce electrolytic copper foil by adopting at least 0.17 as the ratio to limiting current density in order to adjust the shape of copper foil grains. The procedure of the Hull Cell test is described for example at pages 157-160 of "Plating Practice Reader", by Maruyama Kiyoshi, published by Nikkan Kogyo Shimbun, Ltd. June 30, 1983.

The front surface and/or rear surface of the electrolytic copper foil is preferably subjected to anti-corrosion treatment. As non-limiting examples of the anti-corrosion treatment, coating treatment with a single film of chromium oxide or a mixture film of chromium oxide and zinc/zinc oxide may be cited. The treatment with the mixture film of chromium oxide and zinc/zinc oxide is a treatment of forming an anti-corrosion film of zinc or zinc oxide and chromium oxide by electric plating, using a plating bath containing zinc salt or zinc oxide and chromate salt.

As the plating bath, typically, an aqueous mixture solution of at least one of bichromate (e.g. $K_2Cr_2O_7$ and $Na_2Cr_2O_7$) and $CrO_3$, etc. with alkali hydroxide and acid. Also, an aqueous mixture solution of this solution with at least one of aqueous zinc solutions such as ZnO, $ZnSO_4$, ▪ $7H_2O$, etc. may be used.

If necessary, roughening treatment may be performed prior to the anti-corrosion treatment. Roughening particles may be formed by plating one of copper, cobalt and nickel or alloy-plating of two or more of them. Usually, roughening particles are formed from alloy-plating using three of copper, cobalt and nickel. Further, to enhance the heat resistance and weather (anti-corrosion) resistance, the copper foil for a secondary battery negative electrode current collector is preferably coated on both its roughened surfaces with one or more anti-corrosion or heat resistant layers selected from cobalt-nickel alloy layer, zinc-nickel alloy layer, copper -zinc alloy layer and chromate layer and/or a silane coupling layer. Incidentally, without forming roughening particles, at least one of anti-corrosion or heat-resistant layer selected from cobalt-nickel alloy layer, zinc-nickel alloy layer, copper -zinc alloy layer and chromate layer, and/or a silane coupling layer may be formed.

If necessary, for the principal purpose of enhancing the adhesive force between the copper foil and the active material, a silane treatment may be conducted in which a silane coupling agent is applied to both surfaces or the deposition surface on the anti-corrosion layer. As the silane coupling agent for this treatment, olefin silane, epoxy silane, acrylic silane, amino silane, and mercapt silane may be cited and can be appropriately selected. As for the coating method, spraying with a sprayer, coating with a coater, dipping or flowing of the silane coupling agent solution may be adopted.

(Construction of battery)

The electrolytic copper foil according to the present invention can be advantageously employed as a negative electrode current collector of a secondary battery. In general, the secondary battery comprises a negative electrode, a positive electrode, a separator for insulation between the negative electrode and the positive electrode, and a non-aqueous or aqueous electrolyte and these are housed in a battery case. If the electrolyte is a polymer electrolyte, the separator is not required.

(Negative electrode)

The negative electrode generally comprises a negative electrode current collector and a negative electrode active material-containing layer formed on either or both surfaces of the negative electrode current collector. As the negative electrode active material, carbonaceous material, metal, metal compound (metal oxide, metal sulfide, metal nitride) and lithium alloy may be cited.

As the carbonaceous material, graphite, cokes, carbon fibers, spherical carbon, pyrolytic gaseous carbonaceous material, sintered resin body or other graphite material or carbonaceous material may be cited. Graphite or carbonaceous material obtained by heating at 500-3000°C thermosetting resin, isotropic pitch, mesophase pitch-based carbon, mesophase pitch-based carbon fibers, mesophase spherules, and the like may be cited.

As the above-mentioned metal, lithium, aluminum, magnesium, tin and silicon and the like are cited.

As the above-mentioned metal oxide, tin oxide, silicon oxide, lithium-titanium oxide, niobium oxide, tungstic oxide and the like may be cited.

As the above-mentioned metal sulfide, tin sulfide, titanium sulfide and the like may be cited.

As the above-mentioned metal nitride, lithium- cobalt nitride, lithium- iron nitride, lithium- manganese nitride and the like may be cited.

As the above-mentioned lithium alloy, lithium-aluminum alloy, lithium-tin alloy, lithium lead alloy, lithium silicon alloy and the like may be cited.

As mentioned above, since the electrolytic copper foil according to the present invention has a high normal tensile strength and a small decrease in the tensile strength after thermal treatment, this electrolytic copper foil is particularly advantageous when metallic alloy active material such as Si or Sn, which has a large volumetric expansion and requires a high temperature for hardening the binder, is used as a negative electrode active material.

The negative electrode active material-containing layer may contain a binder, a fluidity controlling agent (typically a thickener), or other additives. For example, at least one polymer material appropriately selected from various polymers such as fluorine-containing polymer such as polyvinylidene fluoride (PVDF), polytetrafluoroethylene (PTFE), polyvinylidene fluoride - hexafluoropropylene copolymer (PVDF-HFP) ; rubbers such as styrenebutadiene rubber (SBR), acrylic rubber (e.g. rubber having (meth)acrylate as a main constituent monomer), fluorine rubber (e.g. vinylidene fluoride rubber, tetrafluoroethylene - propylene copolymer rubber), polybutadiene, ethylene - propylene - diene copolymer (EPDM), and sulfonated EPDM; acrylic resin (for example, a resin having (meth)acrylate as a main constituent monomer, polyacrylic acid and the like); cellulosic polymers such as carboxymethylcellulose (CMC), diacetyl cellulose, hydroxypropylcellulose; polyvinyl alcohol; polyalkylene oxide such as polyethylene oxide; and polyimide may be added. Among them, a mixture containing CMC and SBR are preferable. By using the mixture, it is possible to attain a higher adhesion between the current collector and the negative electrode active material.

In the negative electrode active material-containing layer, an electrical conducting agent may be contained. As the conducting agent, acetylene black, powdered expanded graphite or other graphite, ground carbon fibers, ground graphitized carbon fibers and the like may be cited.

(Positive electrode)

The positive electrode is generally composed of a positive electrode current collector and a positive electrode active material-containing layer formed on either one or both surfaces of the positive electrode current collector.

As the positive electrode current collector, aluminum plate, aluminum mesh, etc. may be cited.

The positive electrode active material-containing layer contains the active material and a binder, for example. As the positive electrode active material, manganese dioxide, molybdenum disulfide, chalcogen compounds such as $LiCoO_2$, $LiNiO_2$, $LiMn_2O_4$ may be cited. These chalcogens may be used as a mixture of two or more chalcogens. Especially, a composite oxide of lithium and transition metal is often used in lithium ion secondary battery.

In the positive electrode active material-containing layer, a binder and a fluidity modifier (typically, thickener) may be added like in the negative electrode active material-containing layer. The concrete examples are as explained in connection with the negative electrode active material-containing layer.

In the active material-containing layer, acetylene black, powdered expanded graphite or other graphite, ground carbon fibers, graphitized ground carbon fibers, and the like may be further contained as a conductive assistant.

(Separator)

Between the positive and negative electrodes a separator may be arranged. As the separator, porous polyethylene film, porous polypropylene film, etc. having a thickness of 20-30μm, for example, may be used. When the non-aqueous electrolyte such as solid or gel-like polymer electrolyte is used, the separator may be dispensed with.

(Non-aqueous electrolyte)

The non-aqueous electrolyte can be in the form of non-aqueous electrolytic solution which contains a non-aqueous solvent and an electrolyte dissolvable in this solvent.

As the non-aqueous solvent, ethylene carbonate, dimethyl carbonate, methylethyl carbonate, diethyl carbonate, γ-butylolactone, methyl propionate and the like may be cited. The non-aqueous solvent may be used singly or in combination of two or more of them.

As the electrolyte, lithium perchlorate ($LiClO_4$), lithium hexafluorophosphate ($LiPF_6$), lithium tetrafluoroborate ($LiBF_4$), lithium hexafluoroarsenate ($LiAsF_6$) or the like may be cited. The electrolyte may be used alone or as a mixture. The non-aqueous electrolyte may be in the form of solid, gel or other polymer electrolyte.

[Examples]

Working examples of the present invention will now be explained in the following but the present invention is not intended to be restricted to the examples.

A rotary drum made of titanium having a diameter of about 3133mm and a width of 2476.5mm, and also an electrode arranged around the drum were put in an electrolytic bath with a distance between electrodes of about 5mm. To this electrolytic bath, an aqueous solution of copper sulfate to which glue having the concentration as listed in Table 1 had been added was introduced. Then, the solution was adjusted to the ratio to limiting current density as listed in Table 1 and copper was caused to deposit on the surface of the rotary drum. The deposited copper was scraped off from the drum surface to continuously produce an electrolytic copper foil of the inventive examples or the comparative examples having the thickness as listed in Table 1.

For each of the resulting electrolytic copper foils, the normal tensile strength, the tensile strength after one hour heating at 400°C, the ratio of the tensile strength after heating to 400°C to the normal tensile strength (retention rate), the elongation percentage, and the copper grain size after heating to 400°C for one hour were evaluated according to the above-mentioned conditions for measurement. The results are listed in Table 1.

## Table 1

| | Foil Thickness | Ratio to limiting current density | Glue Concentration | Tensile Strength | | | Elongation percentage | Grain size |
|---|---|---|---|---|---|---|---|---|
| | | | | normal | After heating | Retention rate of initial tensile strength | | |
| | ($\mu$m) | (−) | (mass ppm) | (MPa) | (MPa) | (%) | (%) | ($\mu$m) |
| Inventive Example 1 | 12 | 0.15 | 6 | 632 | 370 | 58.6 | 8.4 | 0.35 |
| Inventive Example 2 | 12 | 0.16 | 6 | 672 | 355 | 52.9 | 8.7 | 0.41 |
| Inventive Example 3 | 10 | 0.16 | 8 | 705 | 405 | 57.4 | 5.6 | 0.29 |
| Inventive Example 4 | 15 | 0.15 | 8 | 685 | 423 | 61.8 | 8.4 | 0.25 |
| Inventive Example 5 | 10 | 0.15 | 10 | 730 | 450 | 61.6 | 7.4 | 0.20 |
| Inventive Example 6 | 10 | 0.14 | 10 | 704 | 503 | 71.4 | 6.5 | 0.14 |
| Inventive Example 7 | 10 | 0.14 | 11 | 713 | 537 | 75.3 | 6.0 | 0.09 |
| Comparative Example 1 | 15 | 0.17 | 3 | 672 | 308 | 45.9 | 8.8 | 1.10 |
| Comparative Example 2 | 10 | 0.15 | 3 | 617 | 298 | 48.3 | 8.3 | 0.56 |
| Comparative Example 3 | 10 | 0.20 | 6 | 743 | 295 | 39.7 | 7.3 | 1.30 |
| Comparative Example 4 | 12 | 0.16 | 15 | 783 | 470 | 60.0 | 3.5 | 0.22 |
| Comparative Example 5 | 12 | 0.10 | 3 | 450 | 303 | 67.3 | 9.1 | 1.15 |
| Comparative Example 6 | 15 | 0.17 | 6 | 684 | 319 | 46.7 | 8.4 | 0.55 |

| | Foil Thickness (μm) | Ratio to limiting current density (-) | Glue Concentration (mass ppm) | Tensile Strength normal (MPa) | Tensile Strength After heating (MPa) | Retention rate of initial tensile strength (%) | Elongation percentage (%) | Grain size (μm) |
|---|---|---|---|---|---|---|---|---|
| Inventive Example 1 | 12 | 0.15 | 6 | 632 | 370 | 58.6 | 8.4 | 0.35 |
| Inventive Example 2 | 12 | 0.16 | 6 | 672 | 355 | 52.9 | 8.7 | 0.41 |
| Inventive Example 3 | 10 | 0.16 | 8 | 705 | 405 | 57.4 | 5.6 | 0.29 |
| Inventive Example 4 | 15 | 0.15 | 8 | 685 | 423 | 61.8 | 8.4 | 0.25 |
| Inventive Example 5 | 10 | 0.15 | 10 | 730 | 450 | 61.6 | 7.4 | 0.20 |
| Inventive Example 6 | 10 | 0.14 | 10 | 704 | 503 | 71.4 | 6.5 | 0.14 |
| Inventive Example 7 | 10 | 0.14 | 11 | 713 | 537 | 75.3 | 6.0 | 0.09 |
| Comparative Example 1 | 15 | 0.17 | 3 | 672 | 308 | 45.9 | 8.8 | 1.10 |
| Comparative Example 2 | 10 | 0.15 | 3 | 617 | 298 | 48.3 | 8.3 | 0.56 |
| Comparative Example 3 | 10 | 0.20 | 6 | 743 | 295 | 39.7 | 7.3 | 1.30 |
| Comparative Example 4 | 12 | 0.16 | 15 | 783 | 470 | 60.0 | 3.5 | 0.22 |
| Comparative Example 5 | 12 | 0.10 | 3 | 450 | 303 | 67.3 | 9.1 | 1.15 |
| Comparative Example 6 | 15 | 0.17 | 6 | 684 | 319 | 46.7 | 8.4 | 0.55 |

## Claims

1. An electrolytic copper foil having a normal tensile strength of 500-750 MPa and further having:

(i) a tensile strength after heating at 400°C for one hour of at least 350 MPa and a copper grain size after heating at 400°C for one hour of 0.50μm or less, or
(ii) a tensile strength after heating at 400°C for one hour of at least 50% of the normal tensile strength and a copper grain size after heating at 400°C for one hour of 0.50μm or less.

2. An electrolytic copper foil according to claim 1, further having:

(i)(a) a tensile strength after heating at 400°C for one hour of at least 450 MPa, or
(ii)(a) a tensile strength after heating at 400°C for one hour of at least 65% of the normal tensile strength.

3. An electrolytic copper foil according to claim 1 or claim 2, wherein an elongation percentage is at least 4%.

4. An electrolytic copper foil according to any one of claims 1 to 3, wherein an elongation percentage is at least 6%.

5. A method for producing an electrolytic copper foil according to any one of claims 1 to 4, comprising performing electrolysis using a sulfuric acid-based copper electrolytic solution containing 6-11 mass ppm of glue and with a ratio to limiting current density of 0.14-0.16.

6. A negative electrode current collector for a secondary battery configured from the electrolytic copper foil according to any one of claims 1 to 4.

7. A secondary battery provided with the negative electrode current collector according to claim 6.

**Patentansprüche**

1. Elektrolytische Kupferfolie mit einer normalen Zugfestigkeit von 500-750 MPa, die ferner Folgendes aufweist:

(i) eine Zugfestigkeit nach dem Erhitzen bei 400°C für eine Stunde von wenigstens 350 MPa und eine Kupferkorngröße nach dem Erhitzen bei 400°C für eine Stunde von 0,50 μm oder weniger, oder
(ii) eine Zugfestigkeit nach dem Erhitzen bei 400°C für eine Stunde von wenigstens 50 % der normalen Zugfestigkeit und eine Kupferkorngröße nach dem Erhitzen bei 400°C für eine Stunde von 0,50 μm oder weniger.

2. Elektrolytische Kupferfolie nach Anspruch 1, die ferner Folgendes aufweist:

(i)(a) eine Zugfestigkeit nach dem Erhitzen bei 400°C für eine Stunde von wenigstens 450 MPa, oder
(ii)(a) eine Zugfestigkeit nach dem Erhitzen bei 400°C für eine Stunde von wenigstens 65 % der normalen Zugfestigkeit.

3. Elektrolytische Kupferfolie nach Anspruch 1 oder Anspruch 2, wobei eine prozentuale Dehnung wenigstens 4 % beträgt.

4. Elektrolytische Kupferfolie nach einem der Ansprüche 1 bis 3, wobei eine prozentuale Dehnung wenigstens 6 % beträgt.

5. Verfahren zum Produzieren einer elektrolytischen Kupferfolie nach einem der Ansprüche 1 bis 4, das das Durchführen von Elektrolyse mit einer elektrolytischen Kupferlösung auf Schwefelsäurebasis beinhaltet, die 6-11 Masseppm Klebstoff enthält, und mit einem Verhältnis zur begrenzenden Stromdichte von 0,14-0,16.

6. Negativer Elektrodenstromkollektor für eine sekundäre Batterie, konfiguriert von der elektrolytischen Kupferfolie nach einem der Ansprüche 1 bis 4.

7. Sekundäre Batterie, die mit einem negativen Elektrodenstromkollektor nach Anspruch 6 versehen ist.

**Revendications**

1. Feuille de cuivre électrolytique ayant une résistance à la traction normale de 500 à 750 MPa et ayant en outre :

(i) une résistance à la traction, après chauffage à 400°C pendant une heure, d'au moins 350 MPa et une granulométrie du cuivre, après chauffage à 400°C pendant une heure, de 0,50 μm ou moins, ou

(ii) une résistance à la traction, après chauffage à 400°C pendant une heure, d'au moins 50 % de la résistance à la traction normale et une granulométrie du cuivre, après chauffage à 400°C pendant une heure, de 0,50 μm ou moins.

2. Feuille de cuivre électrolytique selon la revendication 1, ayant en outre :

(i)(a) une résistance à la traction, après chauffage à 400°C pendant une heure, d'au moins 450 MPa, ou

(ii)(a) une résistance à la traction, après chauffage à 400°C pendant une heure, d'au moins 65 % de la résistance à la traction normale.

3. Feuille de cuivre électrolytique selon la revendication 1 ou la revendication 2, un pourcentage d'élongation étant au moins de 4 %.

4. Feuille de cuivre électrolytique selon l'une quelconque des revendications 1 à 3, un pourcentage d'élongation étant au moins de 6 %.

5. Procédé pour produire une feuille de cuivre électrolytique selon l'une quelconque des revendications 1 à 4, comprenant l'opération consistant à effectuer une électrolyse en utilisant une solution électrolytique de cuivre à base d'acide sulfurique qui contient de 6 à 11 ppm par masse de colle et avec un rapport à la densité de courant de limitation de 0,14 à 0,16.

6. Collecteur de courant d'électrode négative pour une batterie secondaire configuré à partir de la feuille de cuivre électrolytique selon l'une quelconque des revendications 1 à 4.

7. Batterie secondaire munie du collecteur de courant d'électrode négative selon la revendication 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3850155 B
- JP 2008101267 A
- JP 2009299100 A

### Non-patent literature cited in the description

- **MARUYAMA KIYOSHI.** Plating Practice Reader. Nikkan Kogyo Shimbun, Ltd, 30 June 1983, 157-160